(19) Europäisches Patentamt
European Patent Office
Office européen des brevets

(11) **EP 1 890 107 B1**

(12) **FASCICULE DE BREVET EUROPEEN**

(45) Date de publication et mention de la délivrance du brevet:
**13.01.2010 Bulletin 2010/02**

(51) Int Cl.:
*G01C 19/66* *(2006.01)*  *G01C 19/70* *(2006.01)*

(21) Numéro de dépôt: **07113859.8**

(22) Date de dépôt: **06.08.2007**

(54) **Gyrolaser à état solide avec milieu à gain active mécaniquement**

Festkörperlaserkreisel mit mechanisch aktiviertem Verstärkungsmedium

Solid-state gyrolaser with mechanically activated gain medium

(84) Etats contractants désignés:
**DE GB**

(30) Priorité: **18.08.2006 FR 0607394**

(43) Date de publication de la demande:
**20.02.2008 Bulletin 2008/08**

(73) Titulaire: **Thales**
**92200 Neuilly-sur-Seine (FR)**

(72) Inventeurs:
• **Schwartz, Sylvain**
 **75012, PARIS (FR)**
• **Gutty, François**
 **86100, CHATELLERAULT (FR)**

• **Pocholle, M. Jean-Paul**
 **91290, LA NORVILLE (FR)**
• **Feugnet, M. Sylvain**
 **91120, PALAISEAU (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A1- 2 478 810   FR-A1- 2 853 061**
**GB-A- 2 010 576   US-A- 5 367 528**

**Description**

Le domaine de l'invention est celui des lasers en anneau, encore appelés gyrolasers, à état solide. La quasi-totalité des gyrolasers utilise un milieu amplificateur gazeux qui est habituellement un mélange d'hélium et de néon. Cependant, il est possible d'utiliser un gyrolaser à milieu amplificateur à état solide, dans lequel le milieu amplificateur gazeux est remplacé par un élément solide, par exemple une matrice de YAG (Yttrium-Aluminium-Grenat) dopée Néodyme.

Le principe de fonctionnement d'un gyrolaser est fondé sur l'effet Sagnac d'une cavité laser en anneau bidirectionnelle animée d'un mouvement de rotation. L'effet Sagnac induit une différence de fréquence $\Omega$ entre deux modes optiques d'émission dits contra-propagatifs se propageant en sens opposés à l'intérieur de la cavité. Dans les milieux solides habituellement utilisés, dont le Nd:YAG, les modes se propageant dans des sens opposés se partagent les mêmes atomes amplificateurs. On parle alors de gain homogène. Lorsque les deux modes contra-propagatifs ont des fréquences égales ou très proches, le signal d'interférence qui en résulte est une onde stationnaire, éventuellement mobile. Les atomes du milieu à gain participent d'autant plus au processus d'émission stimulée qu'ils sont proches d'un ventre de l'onde stationnaire et d'autant moins qu'ils sont proches d'un noeud. Il se crée alors dans le milieu à gain un réseau d'inversion de population, inscrit par l'onde stationnaire. Ce réseau subsiste tant que les fréquences des deux modes contra-propagatifs sont suffisamment proches. Son contraste est d'autant plus faible que la différence de fréquence est grande devant l'inverse du temps de vie du niveau excité. Il est établi que ce réseau d'inversion de population a des effets néfastes pour la gyrométrie pour deux raisons principales :

- il exacerbe la compétition entre les modes contra-propagatifs, empêchant dans la plupart des cas le régime de battement, qui est le régime de fonctionnement en tant que gyromètre de s'établir ;
- il induit une non linéarité de la réponse en fréquence lorsque le laser est en rotation, ce qui détériore les performances inertielles.

Le premier de ces points peut être traité par diverses techniques basées, par exemple, sur des dispositifs de contre-réaction électronique. Un dispositif optique disposé dans la cavité agit différemment sur l'intensité des modes selon leur sens de propagation. Ces dispositifs sont généralement basés sur des effets optiques non réciproques comme l'effet Faraday.

Toutefois, les dispositifs utilisés pour traiter le problème de la compétition entre modes fonctionnent moins bien aux faibles vitesses de rotation et ne s'affranchissent pas, en général, du problème de la non linéarité de la réponse en fréquence du gyrolaser. Ce problème peut, par exemple, être résolu par l'introduction d'un fort biais en fréquence entre les deux modes contra-propagatifs. Il faut alors maîtriser la stabilité du biais utilisé, sous peine de limiter les performances inertielles. Il est également possible de supprimer l'onde stationnaire dans le milieu à gain et le réseau d'inversion de population généré par cette onde en faisant en sorte que les états de polarisation soient orthogonaux lorsqu'ils interagissent avec le cristal. Cette dernière technique nécessite un contrôle de la biréfringence dans la cavité, ce qui rend difficile son utilisation lorsque des hautes performances inertielles sont requises.

Le document US 5,367,528 décrit un gyrolaser à milieu à gain solide, dans lequel un élément à absorbant saturable ajouté à l'intérieur de la cavité laser est soumis à un mouvement de vibration afin de réduire le phénomène de verrouillage de mode du gyrolaser.

Le principe du dispositif selon l'invention est de moduler la position longitudinale du cristal actif autour d'une position moyenne, afin que les atomes du cristal soient en mouvement par rapport aux noeuds et aux ventres de la figure d'interférence formée par les deux modes contra-propagatifs, quelle que soit la différence de fréquence entre ces deux modes. Le dispositif selon l'invention permet de diminuer le contraste du réseau de gain, et donc ses effets néfastes pour les mesures de gyrométrie tout en ne modifiant pas la longueur de la cavité. Le dispositif permet également d'atténuer les effets de la rétrodiffusion induite par le milieu amplificateur. Enfin, le dispositif selon l'invention constitue potentiellement un dispositif de traitement de la zone aveugle pouvant, selon les cas, se substituer ou être complémentaire du dispositif habituel d'activation mécanique.

Plus précisément, l'invention a pour objet un gyrolaser comportant au moins une cavité optique en anneau et un milieu amplificateur à l'état solide agencés de façon que deux modes optiques dits contra-propagatifs peuvent se propager en sens inverse l'un de l'autre à l'intérieur de ladite cavité optique et traverser le milieu amplificateur, caractérisé en ce que ledit milieu amplificateur est accouplé à un dispositif électromécanique assurant audit milieu amplificateur un mouvement de translation périodique selon un axe sensiblement parallèle à la direction de propagation desdits modes optiques.

Avantageusement, l'amplitude du mouvement suit une loi sinusoïdale, fonction du temps, le produit de l'amplitude maximale du mouvement de translation périodique par le vecteur d'onde moyen des modes optiques correspond à la moitié d'un des zéros de la fonction de Bessel $J_0$ et la fréquence du mouvement de translation périodique est du même ordre de grandeur que ou supérieure à l'inverse de la durée de vie de l'inversion de population dans le milieu amplificateur.

Avantageusement, la fréquence du mouvement est choisie de façon à éviter les résonances paramétriques qui déstabilisent le laser. En particulier, ladite fréquence pourra être avantageusement éloignée de la ou des fréquences de relaxation du laser.

Avantageusement, le dispositif électromécanique est du type piézo-électrique.

Avantageusement, le gyrolaser comprend un dispositif de stabilisation de l'intensité des modes contre-propageants, ledit dispositif peut comporter un système optique disposé dans la cavité, ledit système comprenant au moins un élément polarisant, un rotateur optique à effet non réciproque et un élément optique, ledit élément optique étant soit un rotateur optique à effet réciproque, soit un élément biréfringent, au moins l'un des angles de rotation ou la biréfringence étant réglable.

L'invention concerne également un système de mesure de vitesses angulaires ou de positions angulaires relatives selon trois axes différents, caractérisé en ce qu'il comporte trois gyrolasers ayant au moins l'une des caractéristiques précédentes, orientés selon des directions différentes et montés sur une structure mécanique commune.

L'invention sera mieux comprise et d'autres avantages apparaîtront à la lecture de la description qui va suivre donnée à titre non limitatif et grâce aux figures annexées parmi lesquelles :

- La figure 1 représente une vue générale d'un gyrolaser selon l'invention ;
- Les figures 2, 3 et 4 représentent 3 dispositions géométriques différentes des faisceaux optiques par rapport au milieu amplificateur et au sens du mouvement de translation ;
- La figure 5 représente un exemple de réalisation d'un gyrolaser selon l'invention.

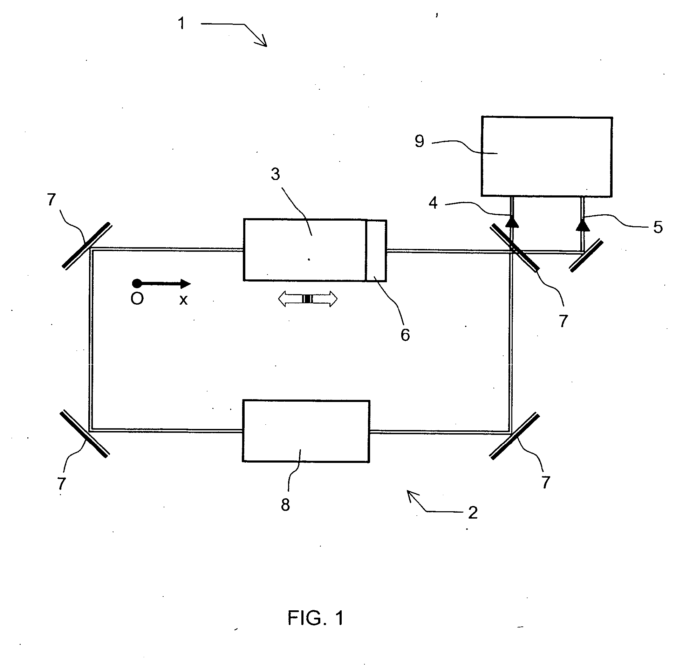

La figure 1 représente une vue générale d'un gyrolaser 1 selon l'invention. Il comprend classiquement :

- Une cavité 2 en anneau composée de miroirs 7 dans laquelle circulent deux modes optiques 4 et 5 dits contra-propagatifs en sens inverse l'un de l'autre ;
- Un milieu amplificateur 3 à état solide traversé par lesdits modes ;
- Des moyens de mesure 9 comprenant au moins des moyens optiques permettant de faire interférer les deux modes optiques, des moyens de calcul permettant de déterminer le déplacement angulaire ou la vitesse angulaire de la cavité à partir de la mesure des interférences obtenues ;
- Eventuellement, d'autres systèmes optiques comme, par exemple, des dispositifs de stabilisation 8 de l'intensité des modes contra-propagatifs.

De plus, le milieu amplificateur est accouplé à un dispositif électromécanique 6 assurant audit milieu amplificateur un mouvement de translation périodique dépendant du temps noté $x_c(t)$ selon un axe Ox sensiblement parallèle à la direction de propagation desdits modes optiques et correspondant à l'axe longitudinal de la cavité.

Dans ces conditions, on peut utiliser, pour décrire la dynamique du laser en anneau à état solide avec milieu amplificateur vibrant, les équations suivantes issues de la théorie semi-classique de Maxwell-Bloch. On obtient :

$$\begin{cases} \dfrac{\mathrm{d}\dot{E}_{\pm}(t)}{\mathrm{d}t} = -\dfrac{\gamma_c}{2}\dot{E}_{\pm}(t) \pm i\dfrac{\Omega}{2}\dot{E}_{\pm}(t) + i\dfrac{\tilde{m}_{\pm}e^{\pm 2ik_c x_c(t)}}{2}\check{E}_{\mp}(t) + \dfrac{\sigma l}{2T}(1-i\delta)\left(N_0\dot{E}_{\pm} + N_{\pm}e^{\pm 2ik_c x_c(t)}\check{E}_{\mp}\right) \\[2mm] \dfrac{\partial N}{\partial t} = W - \dfrac{N}{T_1} - \dfrac{aN}{2T_1}\left|\check{E}_{+}e^{-ik_c(x+x_c)} + \dot{E}_{-}e^{ik_c(x+x_c)}\right|^2 \end{cases}$$

Avec

E$_+$ et E$_-$: amplitudes complexes des modes contra-propagatifs,
$\gamma_c$ : les pertes de la cavité,
$\Omega$ : la non réciprocité induite par effet Sagnac,
m$_+$ et m$_-$ les amplitudes de la rétrodiffusion induite par le milieu amplificateur mobile dans les deux sens de propagation notés + et -. La rétrodiffusion induite par les miroirs fixes n'est pas prise en compte dans ces équations, par souci de simplification,
$k_c$ : le vecteur d'onde du laser,
$\sigma$ : la section efficace d'émission laser,
$l$ : la longueur du cristal,
T : le temps de parcours de la cavité,
$N_0$ : la valeur moyenne de la densité d'inversion de population N,

$N_+$ : la transformée de Fourrier à l'ordre $2k_c$ de N

$N_-$ : le complexe conjugué de $N_+$.

W : la puissance de pompage optique,

$T_1$ : le temps de vie du niveau excité

a : le paramètre de saturation.

Bien que le dispositif puisse fonctionner avec différents types de mouvement de translation périodique, le plus simple à mettre en oeuvre est un mouvement d'amplitude sinusoïdale, fonction du temps t que l'on peut écrire sous la forme :

$$x_c(t) = x_M . \sin(\omega_M . t)$$

avec

$x_M$ : amplitude maximale du mouvement ;

$\omega_M$ : pulsation du mouvement. On a encore la relation : $\omega_M = 2.\pi.f_M$ avec $f_M$ : fréquence du mouvement.

Il apparaît sur la première ligne du système d'équations ci-dessus que chaque mode peut se rétrodiffuser dans le mode opposé par l'intermédiaire de deux phénomènes. Le premier phénomène est induit par la diffusion classique de la lumière sur le milieu amplificateur. Il correspond aux termes en $m_+$ et $m_-$. Le second phénomène est dû à la présence du réseau d'inversion de population. Il correspond aux termes en $N_+$ et $N_-$. Dans les deux cas, un facteur de phase supplémentaire dû au mouvement du milieu à gain apparaît. Il correspond aux termes en $\exp(2ik_c x_c)$. Si l'amplitude et la fréquence de ce mouvement sont suffisantes, l'effet obtenu est une très forte atténuation de l'efficacité de ces deux types de couplage, qui se traduit par un accroissement des performances gyrométriques du laser, notamment en terme de linéarité de la réponse en fréquence.

Par ailleurs, le mouvement du milieu à gain agit également sur l'efficacité avec laquelle les ondes électromagnétiques inscrivent le réseau d'inversion de population. En effet, en l'absence de mouvement, chaque atome voit une intensité lumineuse très différente selon qu'il se situe sur un noeud ou un ventre de l'onde stationnaire. Lorsque le milieu à gain est en mouvement avec une amplitude et une fréquence suffisantes, l'intensité à laquelle est sensible chaque atome n'est ni un noeud ni un ventre mais la moyenne temporelle d'une succession de noeuds et de ventres. Cela a pour effet de diminuer l'inhomogénéité de l'onde lumineuse perçue par les atomes, et donc l'amplitude du réseau d'inversion de population. Dans le cas d'un mouvement sinusoïdal d'amplitude $x_M$ et de fréquence suffisamment élevée, on peut montrer que l'intensité moyenne vue par chaque atome devient indépendante de la position lorsque la condition suivante est vérifiée :

$$\text{Equation 2} \qquad J_0(2k_c . x_M) = 0$$

où $J_0$ désigne la fonction de Bessel J d'ordre 0.

On obtient donc un meilleur fonctionnement du dispositif selon l'invention lorsque l'équation (2) est vérifiée, c'est-à-dire lorsque $2k_c.x_M$ est un zéro de la fonction $J_0$. On donne ici à titre indicatif une valeur approchée des premiers termes de la suite des zéros de la fonction $J_0$ :

2,405 - 5,520 - 8,654 - 11,79 - 14,93 - 18,07 - 21,21 - 24,35...

Naturellement, le non respect de la condition (2) aura d'autant moins d'incidence sur le bon fonctionnement de l'invention que la valeur de $k_c.x_M$ est grande. En pratique, cette valeur sera déterminée par les limites technologiques de réalisation de l'invention, par exemple la plage de fonctionnement des cales piézoélectriques utilisées.

Un troisième effet induit par le mouvement du milieu à gain à la vitesse Vc est la modification de la non-réciprocité en fréquence dans la cavité laser, d'un facteur proportionnel à Vc selon la formule :

$$\Delta F = \frac{\Omega}{2\pi} - 2 \frac{V_c \, L_{\text{cristal}}}{\lambda L_{\text{cavité}}} \left( n^2 - 1 + n\omega \frac{d\,n}{d\omega} \right)$$

où n désigne l'indice optique du milieu à gain. En cas de mouvement sinusoïdal comme décrit par l'équation (1), la non-réciprocité induite est similaire à celle qui est utilisée habituellement sur les gyrolasers activés mécaniquement. Dans ce dernier cas, le mouvement sinusoïdal n'est plus limité au milieu amplificateur mais est imprimé à l'ensemble de la cavité à gain.

A titre d'exemple non limitatif, pour un mouvement oscillant du milieu à gain suivant $x(t) = x_m \sin(2\pi\, f_m\, t)$ avec une amplitude $x_m$ de 8 microns, à une fréquence $f_m$ de 5 kHz, la vitesse du milieu à gain qui vaut $V_c(t) = \dot{x}(t) = 2\pi f_m\, x_m \cos(2\pi\, f_m\, t)$ atteint une amplitude de 0,25 °m/s, ce qui correspond, pour un gyromètre de facteur d'échelle $K_1$ égal à 691 °/s et de périmètre optique 24 centimètres, dans lequel le cristal présente un indice n de 1,82 et une longueur de 25 millimètres, à un biais d'amplitude d'environ 160°/s. Ainsi, l'effet mentionné dans ce paragraphe est bien du même ordre de grandeur que celui introduit habituellement par activation mécanique, ce qui rend la substitution proposée réaliste.

De plus, on conserve avec cette méthode un avantage intrinsèque aux mouvements mécaniques : la valeur moyenne temporelle du biais introduit après un long temps d'acquisition ne dérive pas. Naturellement, ceci n'est vrai qu'à la condition que les paramètres impliqués dans la génération du biais comme la longueur du cristal ou l'indice optique ne varient pas significativement au cours d'un cycle de mouvement du milieu à gain. Si nécessaire, un mouvement de superactivation comme celui utilisé habituellement pour les gyrolasers activés mécaniquement peut être imprimé au milieu à gain.

En résumé, la mise en mouvement du milieu à gain dans un gyrolaser à état solide permet :

- d'introduire une phase oscillante qui a pour effet de moyenner à zéro la rétrodiffusion induite par le milieu à gain et par le réseau d'inversion de population ;
- de déplacer l'onde stationnaire par rapport aux atomes du milieu à gain ce qui a pour effet de réduire le contraste du réseau d'inversion de population ;
- d'introduire un biais oscillant en fréquence, capable de se substituer à ou de compléter l'effet d'une activation mécanique.

Le problème de la compétition entre modes n'est pas entièrement résolu par la mise en mouvement du milieu à gain homogène. En effet, les deux modes contra-propagatifs se partagent toujours les mêmes atomes, et l'un des deux modes est susceptible de monopoliser le gain disponible au détriment de l'autre, ce qui peut perturber le fonctionnement en tant que gyromètre. Le gyrolaser selon l'invention peut donc comporter si nécessaire un dispositif stabilisateur, qui peut comprendre une boucle de rétroaction agissant sur les pertes différentielles entre modes.

L'efficacité du dispositif électromécanique assurant au milieu amplificateur un mouvement de translation périodique dépend du choix de la fréquence et de l'amplitude de la modulation. En particulier, le dispositif fonctionne d'autant mieux que la fréquence de vibration est élevée. La constante de temps typique est le temps de vie de l'état excité dans le milieu à gain. L'amplitude de vibration est typiquement du même ordre de grandeur que la longueur d'onde optique. Comme il a été dit, il existe une série de valeurs discrètes de l'amplitude de vibration pour lesquelles l'efficacité de l'invention est maximale.

Afin de réduire les effets de la rétrodiffusion de la lumière, les faces du cristal ne doivent pas être perpendiculaires à la direction de propagation du faisceau dans la cavité laser. Avantageusement, l'une des faces du cristal peut être placée à l'incidence de Brewster.

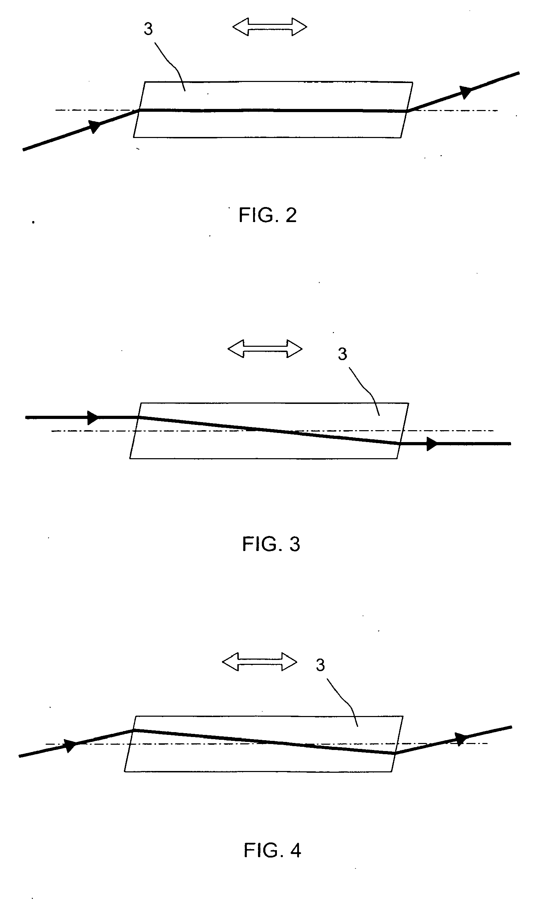

Il existe trois possibilités pour la direction du mouvement du cristal comme indiqué sur les figures 2, 3 et 4:

- Figure 2 : l'axe géométrique du barreau 3 est parallèle à la direction du mouvement et à l'axe de propagation du faisceau dans le cristal ;
- Figure 3 : l'axe du faisceau incident est parallèle à la direction d'activation ;
- Figure 4 : l'axe du faisceau incident, la direction de propagation et la direction du mouvement sont distincts.

Préférentiellement, l'axe optique du cristal amplificateur 3 sera choisi parallèle à la direction de propagation du faisceau dans le cristal comme illustré en figure 2.

Comme il a été dit, il peut être utile de disposer à l'intérieur de la cavité 2 un dispositif de stabilisation 8 de l'intensité des modes contra-propagatifs. Généralement, le dispositif de stabilisation comporte un système optique disposé dans la cavité comprenant au moins un élément polarisant, un rotateur optique à effet non réciproque et un élément optique. Cet élément optique est soit un rotateur optique à effet réciproque, soit un élément biréfringent. Au moins l'un des effets ou la biréfringence est réglable en fonction de la différence d'intensité existant entre les deux modes contra-propagatifs.

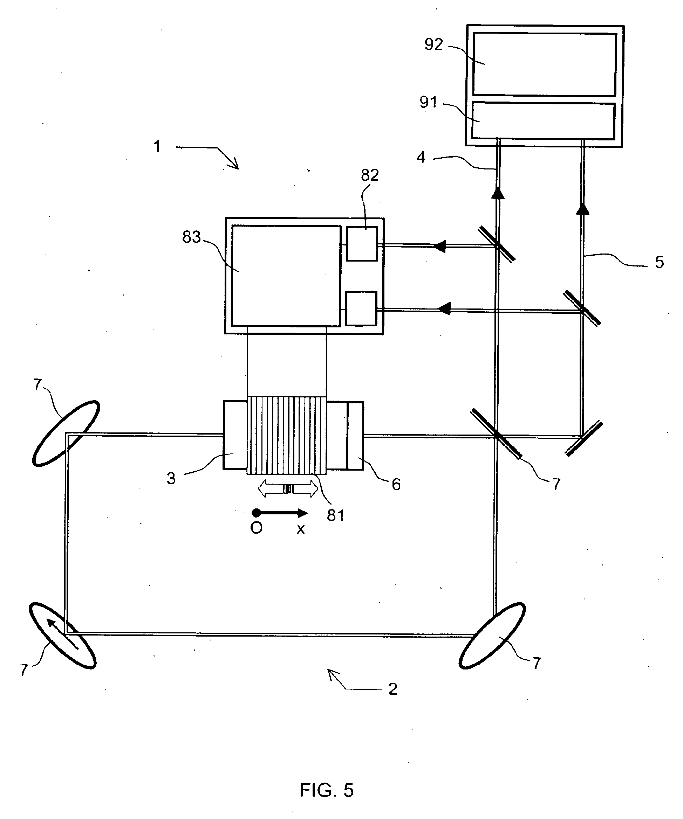

A titre d'exemple non limitatif, la figure 5 représente un gyrolaser comportant un dispositif électromécanique selon l'invention et un dispositif de stabilisation de l'intensité des modes contre-propageants.

Le gyrolaser 1 comprend alors :

- Une cavité laser en anneau 2 comprenant quatre miroirs 7.

o La cavité laser est construite légèrement non planaire, de manière à induire une rotation réciproque de la polarisation de quelques degrés. Ainsi sur la figure 5, trois des quatre miroirs 7 sont représentés par des ellipses inclinées ;

o L'un des miroirs de la cavité a, de plus, un fort effet polarisant. Il est en effet nécessaire, pour le bon fonctionnement du dispositif de stabilisation de l'intensité des modes que les modes soient polarisés. L'effet polarisant est symbolisé par une flèche sur un des miroirs 7 de la figure 5 ;

- Un milieu amplificateur 3 qui est un cristal de YAG dopé Néodyme, pompé optiquement par une diode laser à 808 nm non représentée sur la figure 5 ;
- Le cristal de YAG 3 est monté sur un dispositif piézo-électrique 6 permettant sa mise en vibration à une fréquence d'environ 20 kilohertz et à une amplitude maximale d'environ 8 microns ;
- Un dispositif de stabilisation comprenant :

  o deux photodiodes 82 couplées au dispositif d'asservissement 83 et mesurant l'intensité des deux modes optiques contra-propagatifs 4 et 5 ;
  o une bobine électro-magnétique 81 entourant le cristal de YAG permettant d'introduire un effet Faraday réglable ;
  o un dispositif d'asservissement 83 qui génère un courant circulant dans la bobine 81, ledit courant étant proportionnel à la différence d'intensité entre les modes contra-propagatifs 4 et 5. Le signe de ce courant est choisi de façon que le mode le plus intense subisse les pertes les plus élevées ;

- Un dispositif de lecture et de traitement du signal 9 gyrométrique comprenant :

  o Des moyens opto-électroniques 91 permettant de faire interférer les modes contra-propagatifs et de mesurer les paramètres du système de franges interférant ;
  o Des moyens de calcul 92 permettant de retrouver à partir de ces paramètres les informations de vitesse ou de déplacement angulaire.

Si nécessaire, l'ensemble du dispositif est placé sur une roue d'activation mécanique.

Bien entendu, il est possible de réaliser un système de mesure de vitesses angulaires ou de positions angulaires relatives selon trois axes différents comportant trois gyrolasers selon l'invention, orientés selon des directions différentes et montés sur une structure mécanique commune.

## Revendications

1. Gyrolaser (1) comportant au moins une cavité optique (2) en anneau et un milieu amplificateur (3) à l'état solide agencés de façon que deux modes optiques (4, 5) dits contra-propagatifs peuvent se propager en sens inverse l'un de l'autre à l'intérieur de ladite cavité optique (2) et traverser le milieu amplificateur (3), **caractérisé en ce que** ledit milieu amplificateur (3) est accouplé à un dispositif électromécanique (6) assurant audit milieu amplificateur un mouvement de translation périodique selon un axe sensiblement parallèle à la direction de propagation desdits modes optiques.

2. Gyrolaser selon la revendication 1, **caractérisé en ce que** l'amplitude du mouvement suit une loi sinusoïdale, fonction du temps.

3. Gyrolaser selon la revendication 1, **caractérisé en ce que** le produit de l'amplitude maximale du mouvement de translation périodique par le vecteur d'onde moyen des modes optiques correspond à la moitié d'un des zéros de la fonction de Bessel d'ordre 0.

4. Gyrolaser selon la revendication 1, **caractérisé en ce que** la fréquence du mouvement de translation périodique est du même ordre de grandeur ou supérieure à l'inverse de la durée de vie de l'inversion de population dans le milieu amplificateur.

5. Gyrolaser selon la revendication 1, **caractérisé en ce que** la fréquence du mouvement de translation périodique est différente des résonances paramétriques, lesdites résonances comprenant les fréquences de relaxation du laser.

6. Gyrolaser selon la revendication 1, **caractérisé en ce que** le dispositif électromécanique (6) est du type piézo-électrique.

**7.** Gyrolaser selon l'une des revendications précédentes, **caractérisé en ce qu'**il comprend un dispositif de stabilisation (8) de l'intensité des modes contre-propageants.

**8.** Gyrolaser selon la revendication 7, **caractérisé en ce que** le dispositif de stabilisation comporte un système optique disposé dans la cavité, ledit système comprenant au moins un élément polarisant (7), un rotateur optique à effet non réciproque et un élément optique, ledit élément optique étant soit un rotateur optique à effet réciproque, soit un élément biréfringent, au moins l'un des angles de rotation ou la biréfringence étant réglable.

**9.** Système de mesure de vitesses angulaires ou de positions angulaires relatives selon trois axes différents, **caractérisé en ce qu'**il comporte trois gyrolasers selon l'une des revendications précédentes, orientés selon des directions différentes et montés sur une structure mécanique commune.

## Claims

**1.** Laser gyro (1) comprising at least one optical cavity (2) in the form of a ring and a solid-state amplifying medium (3) which are designed so that two counterpropagating optical modes (4, 5) can propagate in opposite directions one with respect to the other inside said optical cavity (2) and pass through the amplifying medium (3), **characterized in that** said amplifying medium (3) is coupled to an electromechanical device (6) imparting on said amplifying medium a periodic translational movement along an axis substantially parallel to the direction of propagation of said optical modes.

**2.** Laser gyro according to Claim 1, **characterized in that** the amplitude of the movement obeys a sinusoidal law as a function of time.

**3.** Laser gyro according to Claim 1, **characterized in that** the product formed by the maximum amplitude of the periodic translational movement multiplied by the mean wave vector of the optical modes corresponds to half of one of the zeros of the zero-order Bessel function.

**4.** Laser gyro according to Claim 1, **characterized in that** the frequency of the periodic translational movement is of the same order of magnitude as or greater than the inverse of the lifetime of the population inversion in the amplifying medium.

**5.** Laser gyro according to Claim 1, **characterized in that** the frequency of the periodic translational movement is different from the parametric resonant frequencies, said resonant frequencies comprising the relaxation frequencies of the laser.

**6.** Laser gyro according to Claim 1, **characterized in that** the electromechanical device (6) is of the piezoelectric type.

**7.** Laser gyro according to one of the preceding claims, **characterized in that** it includes a device (8) for stabilizing the intensity of the counterpropagating modes.

**8.** Laser gyro according to Claim 7, **characterized in that** the stabilizing device comprises an optical system placed in the cavity, said system comprising at least one polarizing element (7), an optical rotator exhibiting a non-reciprocal effect and an optical element, said optical element being either an optical rotator exhibiting a reciprocal effect or a birefringent element, at least one of the angles of rotation or the birefringence being adjustable.

**9.** System for measuring relative angular positions or angular velocities along three different axes, **characterized in that** it comprises three laser gyros according to one of the preceding claims, these being oriented along different directions and mounted on a common mechanical structure.

## Patentansprüche

**1.** Laserkreisel (1), der mindestens einen ringförmigen optischen Hohlraum (2) und ein Festkörper-Verstärkungsmedium (3) aufweist, die so angeordnet sind, dass zwei so genannte kontrapropagierende optische Moden (4, 5) sich in Gegenrichtung zueinander im Inneren des optischen Hohlraums (2) ausbreiten und das Verstärkungsmedium (3) durchqueren können, **dadurch gekennzeichnet, dass** das Verstärkungsmedium (3) mit einer elektromechanischen Vorrichtung (6) gekoppelt ist, die dem Verstärkungsmedium eine periodische Translationsbewegung gemäß einer Achse im Wesentlichen parallel zur Ausbreitungsrichtung der optischen Moden sichert.

2. Laserkreisel nach Anspruch 1, **dadurch gekennzeichnet, dass** die Amplitude der Bewegung einem zeitabhängigen sinusförmigen Gesetz folgt.

3. Laserkreisel nach Anspruch 1, **dadurch gekennzeichnet, dass** das Produkt aus der maximalen Amplitude der periodischen Translationsbewegung und dem mittleren Wellenvektor der optischen Moden der Hälfte einer der Nullstellen der Bessel-Funktion der Ordnung 0 entspricht.

4. Laserkreisel nach Anspruch 1, **dadurch gekennzeichnet, dass** die Frequenz der periodischen Translationsbewegung von der gleichen Größenordnung oder größer als der Umkehrwert der Lebensdauer der Populationsinversion im Verstärkungsmedium ist.

5. Laserkreisel nach Anspruch 1, **dadurch gekennzeichnet, dass** die Frequenz der periodischen Translationsbewegung sich von den parametrischen Resonanzen unterscheidet, wobei die Resonanzen die Relaxationsfrequenzen des Lasers enthalten.

6. Laserkreisel nach Anspruch 1, **dadurch gekennzeichnet, dass** die elektromechanische Vorrichtung (6) vom piezoelektrischen Typ ist.

7. Laserkreisel nach einem der vorhergehenden Ansprüche, **dadurch gekennzeichnet, dass** er eine Vorrichtung (8) zur Stabilisierung der Intensität der kontra-propagierenden Moden enthält.

8. Laserkreisel nach Anspruch 7, **dadurch gekennzeichnet, dass** die Stabilisierungsvorrichtung ein in dem Hohlraum angeordnetes optisches System aufweist, wobei das System mindestens ein polarisierendes Element (7), einen optischen Rotator mit nicht-reziproker Wirkung und ein optisches Element enthält, wobei das optische Element entweder ein optischer Rotator mit reziproker Wirkung oder ein doppelbrechendes Element ist, wobei mindestens einer der Drehwinkel oder die Doppelbrechung einstellbar ist.

9. System zur Messung von Winkelgeschwindigkeiten oder von relativen Winkelstellungen gemäß drei unterschiedlichen Achsen, **dadurch gekennzeichnet, dass** es drei Laserkreisel nach einem der vorhergehenden Ansprüche aufweist, die gemäß unterschiedlichen Richtungen ausgerichtet und auf eine gemeinsame mechanische Struktur montiert sind.

1

9

3

7

O → x

6

4

5

7

7

8

2

7

FIG. 1

**FIG. 2**

**FIG. 3**

**FIG. 4**

FIG. 5

**EP 1 890 107 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5367528 A